# EUROPEAN PATENT APPLICATION

(11) **EP 4 403 077 A1**
(43) Date of publication of application: **24.07.2024**
(21) Application number: 24153282.9
(22) Date of filing: 22.01.2024
(51) Int. Cl.: A47J 31/60, B08B 9/08

(54) **DEVICE FOR CLEANING FILTERS FOR COFFEE MACHINES**

(30) Priority: 20.01.2023 IT 202300000858
(71) Applicant: Cadamuro, Ezio, 31017 Paderno del Grappa (TV) (IT)
(72) Inventor: Cadamuro, Ezio, 31017 Paderno del Grappa (TV) (IT)
(74) Representative: Caldon, Giuliano

(57) **Abstract**

Device (1) for cleaning filters for coffee machines comprising a containment structure (2), which defines a housing chamber (3) provided with at least one inlet opening (4), a brush (5), which is placed inside the housing chamber (3), faces the inlet opening (4) and is susceptible of being rotated around a rotation axis (X) thereof, movement means (6), which carry the brush (5) mounted thereon and are arranged in order to rotate the aforesaid brush (5) around the rotation axis (X), and a support structure (7), which is mechanically connected to the containment structure (2), is placed mainly inside the housing chamber (3) of the containment structure (2), defines a mounting seat (8) for the movement means (6) and is arranged for supporting such movement means (6) inside the housing chamber (3).

In addition, the movement means (6) comprising an electric motor (9) provided with a casing (10) and with a drive shaft (11). The casing (10) is sealed against dust, it is partly inserted in the mounting seat (8) and partly extended outside the mounting seat (8) and, in addition, the drive shaft (11) is rotatably inserted in the casing (10), carries the brush (5) mounted thereon and is actuatable in rotation with respect to the casing (10) in order to rotate the aforesaid brush (5).

## Description

### Field of application

The present invention regards a device for cleaning filters for coffee machines according to the preamble of the independent claim 1.

The device for cleaning filters for coffee machines is inserted in the field of machines for preparing coffee and in particular for preparing espresso coffee.

In particular, the present device for cleaning filters for coffee machines is intended to be employed for cleaning coffee ground residue that have remained in the filter of the coffee machine after the preparation of an espresso coffee, i.e. it is intended to be employed for cleaning coffee grounds.

Therefore, the device for cleaning filters for coffee machines, object of the present invention, is inserted in the industrial field of production of machines for restaurants and in particular machines for producing coffee, intended to be used in bars, café, restaurants and the like.

### Field of the art

As is known, the method for preparing an espresso coffee provides for arranging a dose of ground coffee within a filter of a coffee machine and subsequently provides for percolating a flow of hot water at high pressure through such ground coffee contained in the filter in order to extract aroma and color thereof and thus obtain a cup of espresso coffee.

In addition, the filter containing the ground coffee is intended to be housed in a filter holder, i.e. a container suitably sized for containing the dose necessary for preparing one or two cups of espresso coffee, based on requirements.

In turn, additionally, the filter holder is intended to be inserted within the coffee machine to intercept the flow of hot water at high pressure.

With each new coffee to be prepared, it is necessary to extract the filter holder from the coffee machine, emptying it of the coffee ground residue contained therein (hereinbelow also termed "coffee grounds") and loading it with a new dose of ground coffee.

In order to extract the coffee ground residue from the filter for coffee machines, cleaning devices are known comprising a rotating brush, which is provided with a plurality of cleaning elements, substantially platelike, and is mechanically mounted on an electric motor arranged for rotating it, such that its cleaning elements rotate in contact with the filter and/or filter holder to be cleaned, removing the coffee ground residue.

In particular, the devices of known type comprise a containment structure which defines a housing chamber, and within such chamber the rotating brush and the electric motor are placed. More in detail, in order to facilitate the positioning by an operator (i.e. in particular a barman) of the filter to be cleaned on the rotating brush, the latter is placed within the housing chamber with its rotation axis substantially vertical and faces an upper opening of the housing chamber. In addition, the electric motor, which carries the brush mounted thereon, is placed below the aforesaid brush.

In operation, the method for operating the devices of known type, described briefly above, provides for arranging the filter holder, containing the filter and the dose of coffee residue, on the rotating brush in contact with the latter. More in detail, the method provides for arranging the filter holder overturned/upside down with respect to the position in which it is inserted in the coffee machine, with the coffee grounds in contact with the cleaning elements of the rotating brush. In this manner the coffee grounds fall by gravity outside the filter, following the mechanical action executed by the rotating brush of the device.

In practice, the devices for cleaning filters of coffee machines of known type have in practice demonstrated that they do not lack drawbacks.

The main drawback lies in the fact that the electric motor is placed below the rotating brush and, therefore, during use, the ground coffee (which is removed from the filter and/or filter holder following the action of the rotating brush) falls by gravity towards the bottom of the housing chamber (at which a collection tank or a trash bag is generally placed) and dirties the electric motor, risking to damage it, being inserted at its interior. Therefore, in order to protect the motor from the ground coffee (as is for example shown in the prior art document US 2021/267411, US 2011/030562, KR 101395950, IT 2018000003418 and IT 2018000009748), it is necessary to arrange a support structure inside the housing chamber which is simultaneously capable of maintaining the electric motor suspended within the housing chamber and of protecting the aforesaid motor from dust. In particular, such support structure is mechanically connected to the containment structure and is provided with a box-like portion which internally defines a sealed seat for the electric motor, in a manner such that the dust cannot come to damage the same electric motor.

Nevertheless, the arrangement of a box-like portion of the containment structure (which defines a sealed seat within which the electric motor is placed) renders the device of known type particularly complicated and costly to attain, being necessary, during device assembly, to seal the box-like portion of the support structure.

### Presentation of the invention

Main object of the present invention is therefore that of overcoming the drawbacks manifested by the solutions of known type, by providing a device for cleaning filters for coffee machines, which is simultaneously simple to assemble during production and resistant to the ground coffee removed, during use, from a filter for coffee machines that must be cleaned.

A further object of the present invention is to provide a device for cleaning filters for coffee machines, which is simple and inexpensive to attain.

A further object of the present invention is to provide a device for cleaning filters for coffee machines, which is entirely reliable in operation.

### Brief description of the drawings

The technical characteristics of the invention, according to the aforesaid objects, can be clearly seen in the contents of the below-reported claims and the advantages thereof will be more evident from the following detailed description, made with reference to the enclosed drawings, which represent a merely exemplifying and non-limiting embodiment of the invention, in which:

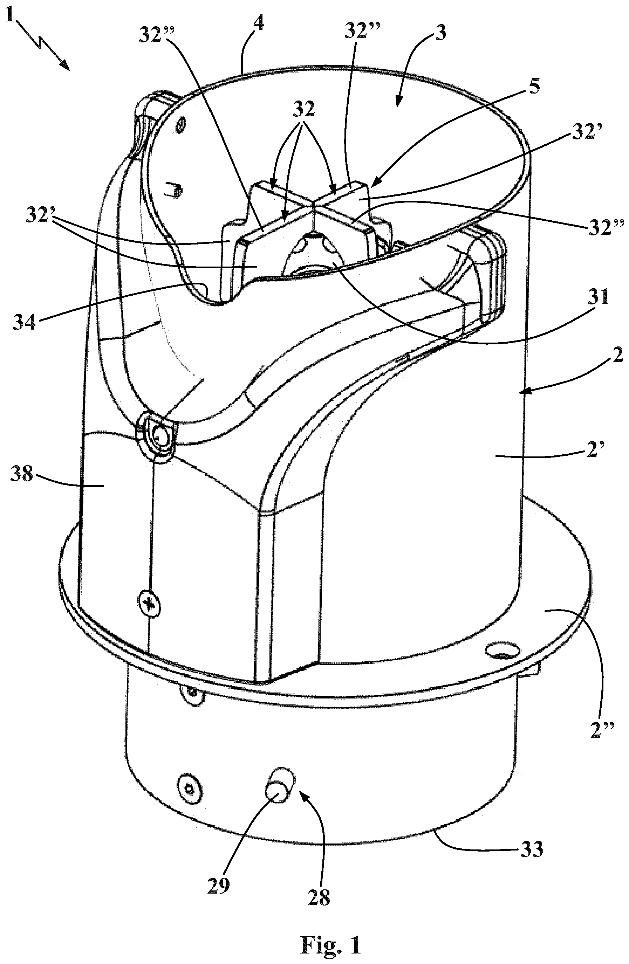

- figure 1 shows a perspective view of the device for cleaning filters for coffee machines, object of the present invention;
- figure 2 shows a side section view of the device for cleaning filters for coffee machines, object of the present invention, in accordance with a first embodiment;
- figure 3 shows a side section view of the device for cleaning filters for coffee machines, object of the present invention, in accordance with a second embodiment;
- figure 4 shows a side section view of the device for cleaning filters for coffee machines, object of the present invention, in accordance with a third embodiment.

### Detailed description of a preferred embodiment

With reference to the enclosed drawings, reference number 1 overall indicates a device for cleaning filters for coffee machines, which is advantageously intended to be employed for the removal and subsequent collection of coffee ground residue (i.e. for cleaning and collecting coffee grounds) present within a filter of a coffee machine after the preparation, for example, of an espresso coffee.

Of course, the present invention can also have use for cleaning filters that are not intended to contain coffee grounds for preparing espresso coffee. For example, the present invention can be used for cleaning filters intended to contain barley grounds, for preparing barley coffee, or other ground varieties, without departing from the scope of the present protection.

The present device 1 comprises a containment structure 2 defining a housing chamber 3 provided with at least one inlet opening 4 (in particular upper), which is advantageously intended to be directed upward during use.

More in detail, the containment structure 2 of the present device 1 is intended to be associated with a work surface, in particular with the work surface on which one or more machines for preparing coffee are placed, or with one or more coffee grinders for grinding the coffee beans or with other apparatuses intended for the preparation of espresso coffee or the like.

Additionally, the present device 1 comprises a brush 5, which is placed inside the housing chamber 3, faces the inlet opening 4 of the aforesaid housing chamber 3 and is susceptible of being rotated around a rotation axis X thereof.

More in detail, the placement of the brush 5 facing the inlet opening 4 facilitates the positioning, by an operator (e.g. a barman), of a filter for coffee machines that must be cleaned of a dose of coffee ground residue, following the preparation of a cup of coffee. In particular, the brush 5 is susceptible of being rotated around its rotation axis X with a filter (to be cleaned) of the coffee machine placed in abutment thereon, in a manner such that the brush 5, by rotating in contact with the aforesaid filter and dragging against it, removes the coffee ground residue still contained within the same filter, making it exit from the latter and fall.

Advantageously, the containment structure 2 (and hence preferably also the housing chamber 3) is extended mainly longitudinally along a main axis Y, which is preferably parallel (or possibly coinciding) with the rotation axis X of the brush 5.

In addition, preferably, such housing chamber 3 is extended between the abovementioned inlet opening 4 and an opposite discharge opening 33 (in particular lower), which are in particular aligned with each other and with the rotation axis X of the brush 5.

In particular, the discharge opening 33 is intended to be directed downward during use in order to receive the coffee ground residue via falling.

More in detail, as illustrated in the enclosed figures, the containment structure 2 preferably has substantially tubular form and is intended to be placed with its main axis Y substantially vertical (such that the rotation axis X of the brush 5 is in turn placed substantially vertical, the main axis Y of the containment structure 2 preferably being parallel to or coinciding with the rotation axis X).

In particular, the containment structure 2 is provided with a lateral wall 2' extended longitudinally along the main axis Y (which is preferably parallel to or coinciding with the rotation axis X of the brush 5) and circumferentially around the rotation axis X of the brush 5 in order to delimit the housing chamber 3 (consequently conferring, to the containment structure 2, substantially tubular shape).

Advantageously, the brush 5 is provided with a central hub 31, which is extended mainly longitudinally along the rotation axis X, and with a plurality of cleaning elements 32, which are mounted on the central hub 31 and are extended radially with respect to the rotation axis X.

Preferably, each cleaning element 32 is substantially plate-like and is extended along a lying plane thereof, which can be parallel to the rotation axis X or contain the same rotation axis X.

In addition, in particular, in order to distribute, in the best possible manner, the mass of the same brush 5 around the rotation axis X, the cleaning elements 32 are equally distributed around the same rotation axis X.

More in detail, the arrangement of cleaning elements 32, each extended along a corresponding lying plane parallel to the rotation axis X and equally distributed around the rotation axis X, renders the brush 5 particularly suitable for being employed in a specific rotation sense around the rotation axis X, while the arrangement of cleaning elements 5, each extended along a corresponding lying plane containing the rotation axis X itself and equally distributed around the rotation axis X, renders the brush 5 particularly suitable for being employed in both the rotation senses with respect to the aforesaid rotation axis X.

Advantageously, each cleaning element 32 of the brush 5 is provided with two opposite main surfaces 32', which are placed substantially parallel to the corresponding lying plane (and are therefore substantially parallel also to the rotation axis X).

Additionally, each cleaning element 32 is preferably provided with a perimeter edge 32", in particular quadrangular, placed to connect the aforesaid two main surfaces 32'.

In particular, the perimeter edge 32" of each cleaning element 32 is provided with a constrained side, fixed to the central hub 31, and with three free sides substantially shaped in order to follow the internal surfaces of the filter for coffee machines to be cleaned.

In operation, the cleaning elements 32 are susceptible of acting by dragging, with at least one of the free sides of the internal surfaces of the filter to be cleaned in order to remove coffee grounds contained therein. More in detail, the cleaning elements 32 are susceptible of acting by dragging on an internal lateral surface of the filter and preferably also on a bottom surface of the same filter.

Advantageously, moreover, the cleaning elements 32 of the brush 5 are made of elastically deformable plastic, which is adapted to be bent in order to be adapted to different types of filters (different, in particular, due to size and/or shape). For example, the cleaning elements 32 can be made of thermoplastic or thermosetting elastomers, or of silicon materials or of natural or synthetic rubbers.

Additionally, the present device 1 comprises movement means 6, which carry the brush 5 mounted thereon and are arranged in order to rotate the aforesaid brush 5 around the rotation axis X.

In addition, the present device 1 comprises a support structure 7, which is mechanically connected to the containment structure 2, is placed mainly inside the housing chamber 3 of the containment structure 2, defines at least one mounting seat 8 for the movement means 6 and is arranged for supporting the aforesaid movement means 6 inside the housing chamber 3.

Hence, more in detail, the brush 5 is maintained suspended within the housing chamber 3 by the movement means 6 and by the support structure 7, in particular suspended between the inlet opening 4 and the discharge opening 33.

As indicated above, the brush 5 is placed facing the inlet opening 4 and, in addition, is preferably placed slightly lowered with respect to the aforesaid inlet opening 4. Therefore, the brush 5 is advantageously entirely contained in the housing chamber 3 with the containment structure 2 that surrounds the brush 5 itself.

Advantageously, in this manner, the containment structure 2 acts as a barrier and prevents coffee grounds - removed from the filter to be cleaned and subjected to a centrifugal force, imparted thereto by the brush 5 brought into rotation during use - from being radially thrust outside the inlet opening 4, dirtying the area surrounding the present device 1.

In addition, in order to allow the filter for coffee machines to easily come into contact with the the brush 5 placed entirely within the housing chamber 3, the containment structure 2 is advantageously provided with a concavity 34, which is made starting from the inlet opening 4 and is preferably shaped substantially as a "U".

More in detail, in a per se known manner, the filter for coffee machines is intended to be placed within a filter holder, such that it can then be associated with the coffee machine. Additionally, in a per se known manner, the aforesaid filter holder is advantageously provided with a handle such that it can be gripped by an operator (e.g. a barman) of the coffee machine, in a manner such that, through the filter holder itself, the filter can be engaged with or disengaged from the coffee machine and can be filled with a dose of ground coffee necessary for the preparation of a new espresso coffee or can be emptied by the ground coffee residue that constitutes the coffee grounds.

In operation, the method for using the present device 1 provides that, after the preparation of the coffee, an operator, by gripping the handle of the filter holder, carries the filter facing the inlet opening 4 and the brush 5 contained in the housing chamber 3 and places the aforesaid filter upside-down with respect to the position in which it is engaged with the coffee machine, with the residue grounds to be removed directed towards the brush 5 itself. Subsequently, the operator places the handle of the filter holder to traverse the concavity 34 in order to insert the filter in the housing chamber 3 up to bringing the grounds to be removed and/or the internal surfaces of the same filter in contact with at least one free side of the perimeter edge 32' of the cleaning elements 32 of the brush 5 and, in addition, the brush 5 itself is then rotated around its rotation axis X in order to remove and make the residue grounds fall from the filter and drag against the walls of the same filter, scraping away any possible remainder of the aforesaid grounds.

Advantageously, the device 1 according to the invention comprises an electronic control unit 30 operatively connected to the movement means 6 and arranged at least for commanding the aforesaid movement means 6 to rotate the brush 5 around the rotation axis X.

Additionally, the aforesaid present device 1 advantageously comprises an actuation module operatively connected to the electronic control unit 30 and arranged for sending a command signal to the aforesaid electronic control unit 30, in particular when it is necessary to rotate the brush 5 around its rotation axis X, and such electronic control unit 30 is preferably arranged for commanding the movement means 6 to rotate the brush 5 around the rotation axis X as a function of the aforesaid command signal. More in detail, the actuation module can for example comprise a pressure sensor, which is installed on the movement means 6 and is arranged for sending the command signal to the electronic control unit 30 when it detects a pressure (for example exerted by the filter for coffee machines to be cleaned) against the brush 5, or a proximity sensor, which is installed adjacent to the inlet opening 4 and is arranged for sending the command signal to the electronic control unit when it detects the presence of an object (i.e. in particular the presence of the filter to be cleaned) within a pre-established distance from the brush 5.

Preferably, the electronic control unit 30 comprises a timing module, which is arranged for reversing the rotation sense of the brush 5 around the rotation axis X at pre-established regular time intervals.

In particular, the arrangement of the timing module lengthens the use lifetime of the brush 5 since, by reversing the rotation sense of the latter, it distributes the wear on the cleaning elements 32 of the same brush 5 in the most uniform possible manner.

Additionally, the arrangement of the aforesaid timing module allows the movement means 6 to better operate, since it prevents that these, by rotating the brush 5 always in a same sense, remain with use unbalanced with respect to the rotation axis X.

As is visible from the enclosed figures, the present device 1 comprises a box-like body 38 fixed to the lateral wall 2' of the containment structure 2 outside the housing chamber 3 and defining, with the aforesaid lateral wall 2', a housing volume, in which the aforesaid electronic control unit 30 is placed, such that the aforesaid electronic control unit 30 can be protected by the aforesaid box-like body 38 with regard to accidental impact and ground coffee residue.

Advantageously, the present device 1 comprises a collection tank (not illustrated), which is removably connected to the containment structure 2 (in particular removably connected to the lateral wall 2'), preferably in a position below the housing chamber 3, in a manner such to collect the coffee grounds removed from the filter for coffee machines following the actuation of the brush 5.

More in detail, the aforesaid collection tank internally defines a collection volume, which is advantageously intended to be filled with coffee grounds residue that falls via gravity from the filter during use of the present device 1, and is provided with an access mouth communicating with the collection volume and placed at the discharge opening 33 of the housing chamber 3.

In particular, the arrangement of a collection tank removably connected to the containment structure 2 ensures that the coffee grounds residues come to be deposited within the collection tank itself, which can be easily disconnected from the containment structure 2 so to be able to throw away the grounds collected therein into the trash, which can be cleaned and subsequently reconnected to the containment structure 2.

In order to attain the removable connection between the collection tank and the containment structure 2, the present device 1 advantageously comprises quick fixing means 28. In particular, such quick fixing means 28 comprise coupling pins 29, which are extended preferably radially with respect to the rotation axis X (and hence also with respect to the main axis Y) and are mounted on one between the collection tank and the containment structure 2, and corresponding grooves made on the other between the collection tank and the containment structure 2 and shaped in a manner such to constitute, together with such coupling pins 29, a coupling that is for example a bayonet coupling.

As illustrated in the enclosed figures relative to two possible embodiments of the present device 1, the coupling pins 29 are preferably mounted on the containment structure 2 (in particular on the lateral wall 2') and are placed adjacent to the discharge opening 33 (still more preferably, such coupling pins 29 are also placed outside the housing chamber 3) and, in addition, the corresponding grooves are made on the collection tank adjacent to the access mouth.

Otherwise, in accordance with further embodiment variants not illustrated in the enclosed figures, the coupling pins 29 can be mounted on the collection tank adjacent to the access mouth and the corresponding grooves can be made on the containment structure 2 adjacent to the discharge opening 33.

Otherwise, in accordance with other non-illustrated embodiment variants, the present device 1 can be without the collection tank and, therefore, in this case, it is preferable to place the device 1 itself above a trash bag, in a manner such that the ground coffee residue that is removed from the filter during the use of the device 1 traverses the housing chamber 3 and the discharge opening 33 and falls directly within the aforesaid trash bag.

In order to install the present device 1 on a work surface without leaving the possible collection tank or the trash bag visible, the containment structure 2 is advantageously also provided with a support flange 2", which is fixed to the lateral wall 2' outside the housing chamber 3, is extended at least partly around the main axis Y, is spaced both from the inlet opening 4 and from the discharge opening 33 and is intended to be placed in abutment against the abovementioned work surface, in a manner such that a part of the lateral wall 2' (that part which terminates with the discharge opening 33) is extended to traverse a suitable opening made on the work surface and below the aforesaid work surface and that a part of the same lateral wall 2' (that part which terminates with the inlet opening 4) is extended above the work surface itself.

Preferably, such support flange 2" is extended substantially transverse (in particular orthogonal) to the rotation axis X (and hence also to the main axis Y) with substantially annular shape around the aforesaid rotation axis X.

In particular, the protective body 38 (i.e. the component which encloses the electronic control unit 30 in order to protect it) is placed between the support flange 2" and the inlet opening 4, in a manner such that the protective body 38 remains visible to a user and that possible light indications (e.g. LED) placed at the aforesaid protective body 38 can communicate to the user that the present device 1 is on and/or the movement means 6 are operating.

According to the idea underlying the present invention, the movement means 6 comprise an electric motor 9. Such electric motor 9 is provided with a casing 10, which is extended between a first portion 10' (in particular upper) and an opposite second portion 10" (in particular lower), is sealed at least against dust, is partly inserted in the mounting seat 8 of the support structure 7 and is partly extended outside the mounting seat 8, and a drive shaft 11, which is rotatably inserted in the casing 10, projects from the first portion 10' of the casing 10, carries the brush 5 mounted thereon and is actuatable in rotation with respect to the casing 10 in order to rotate the brush 5 itself around the rotation axis X.

More in detail, the casing 10 of the electric motor 9 is a separate component with respect to the support structure 7, within whose mounting seat 8 the same casing 10 is partly inserted.

As is generally known, the electric motor 9 comprises a stator and a rotor (and possibly also other internal components).

More in detail, the stator is completely enclosed by the casing 10 and the rotor is at least partly enclosed by the casing 10 itself, in particular the rotor being able to be made integrally with the drive shaft 11 or carry such drive shaft 11 fixed thereto, wherein the drive shaft 11 projects from the first portion 10' of the casing 10.

Given that the stator and the rotor are preferably enclosed within the casing 10, the latter, being sealed at least against dust, prevents the ground coffee residue (which, during the use of the present device 1, falls from the filter for coffee machines to be cleaned) from inserting itself and damaging the stator and the rotor and the possible other internal components of the electric motor 9.

More in detail, the electric motor 9 (which can for example be of low voltage type) for the movement means 6 can be power supplied by means of a power plug (power suppliable for example at 12, 24, 48, 125 or 220 V), by means of one or more batteries and/or by means of one or more photovoltaic cells placed outside the housing chamber 3.

In particular, the use of an electric motor 9 having a casing 10 sealed against dust allows employing a support structure 7 that is particularly simple, which renders the assembly of the present device 1 quite easy. Indeed, the arrangement of the casing 10 sealed at least against dust prevents the electric motor 9 from being damaged by the ground coffee residue which is removed from the filters for coffee machines during the rotation of the brush 5, since such sealed casing 10 entirely or nearly entirely prevents the ground coffee from being inserted within the electric motor 9, which the casing 10 is itself part of. Therefore, it is not necessary to use a support structure 7 composed of multiple parts in order to completely enclose the same electric motor 9 at its interior, and which requires being sealed at the points of contact between its different parts, for the purpose of preventing the ground coffee from entering therewithin and coming into contact with the electric motor 9. Therefore, during assembly of the device 1 according to the invention, it is sufficient to fix the support structure 7 inside the containment structure 2 and partially insert the casing 10 of the electric motor 9 in the mounting seat 8 defined by the aforesaid support structure 7, without it being necessary to arrange further components which enclose the electric motor 9 inside the mounting seat 8 and without having to seal the aforesaid mounting seat 8, since it is used an electric motor 9 with a casing 10 which is already sealed at least against dust.

Advantageously, in order to make electric motor 9 resistant against the entrance of dust, the casing 10 is provided with a protection degree IP (Ingress Protection) 5X or IP 6X of the international standard IEC 60529 (where, in particular, the degree IP 5X of the aforesaid international standard provides that the casing 10 be sealed such to allow an entrance of dust within the electric motor 9 such to not interfere with a satisfactory operation of the present device 1, while the degree IP 6X provides that the casing 10 totally prevents any entrance of dust within the electric motor 9).

Additionally, in order to allow an easy cleaning of the present device 1 by using water, e.g. even tap water, the casing 10 is preferably also sealed against the access of liquids. Such casing 10 is in particular provided with a degree of protection IP (Ingress Protection) X5 or greater of the same international standard IEC 60529 (where, more in detail, the degree X5 provides that the casing 10 is capable of preventing, for at least 3 minutes, the entrance of water from a flow having flow rate of 12.5 liters per minute and pressure of 30 kPa at a distance of 3 meters from the source of the flow itself).

Therefore, preferably, the casing 10 of the electric motor 9 is sealed both against the entrance of dust and against the access of liquids and is in particular provided with a degree of protection IP 55 or greater of the international standard IEC 60529 (where the casing 10 can be sealed with a degree greater than IP 55 with regard to the protection from dust, such as for example a degree IP 65, or it can be sealed with a degree greater than IP 55 with regard to the access of liquids, such as for example a degree IP 58, or it can be sealed with a degree greater than IP 55 both with regard to protection from dust and with regard to the access of liquids, such as for example a degree IP 67). Advantageously, the casing 10 of the electric motor 9 is rigidly fixed to the support structure 7.

In particular, the casing 10 is inserted in the mounting seat 8 defined by the support structure 7, partially projecting outside the mounting seat 8 itself.

Advantageously, the support structure 7 is fixed overhanging from the tubular wall 2' of the containment structure 2, extended from such tubular wall 2' within the housing chamber 3 defined by the latter.

Advantageously, the central hub 31 of the brush 5 is fixed to the drive shaft 11 of the electric motor 9 for the movement means 6 and one or more of the cleaning elements 32 are removable with respect to the central hub 31.

Preferably, all the cleaning elements 32 are removable with respect to the central hub 31.

More in detail, the arrangement of cleaning elements 32 allows lengthening the use lifetime of the brush 5 since it allows substituting one or more of the same cleaning elements 32, once they have been worn due to use.

In addition, the removable cleaning elements 32 can also be substituted with other removable cleaning elements 32 such to be able to adapt the brush 5 to different filter sizes for coffee machines to be cleaned or to different filter shapes and types.

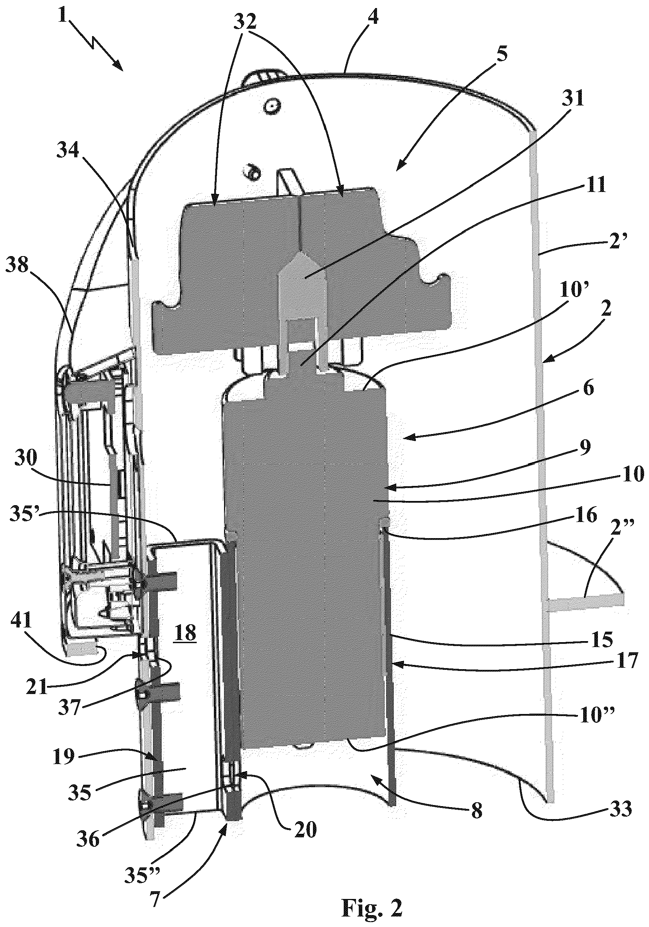

In accordance with the first embodiment illustrated in the enclosed figure 2, the casing 10 of the electric motor 9 for the movement means 6 is advantageously inserted via fitting in the mounting seat 8 defined by the support structure 7.

In this manner, in order to assemble the device 1 according to the invention, following the fixing of the support structure 7 inside the containment structure 2, it is sufficient to pressure insert the casing 10 of the electric motor 9 in the mounting seat 8 defined by the support structure 7, until the casing 10 itself is fit in such support structure 7, thus preventing the risk that such electric motor 9 can be separated from the same support structure 7 during the normal use of the present device 1.

Preferably, in order to obtain the insertion via fitting of the casing 10, the casing 10 is sized in a manner to constitute a mechanical interference with the support structure 7 that defines the mounting seat 8.

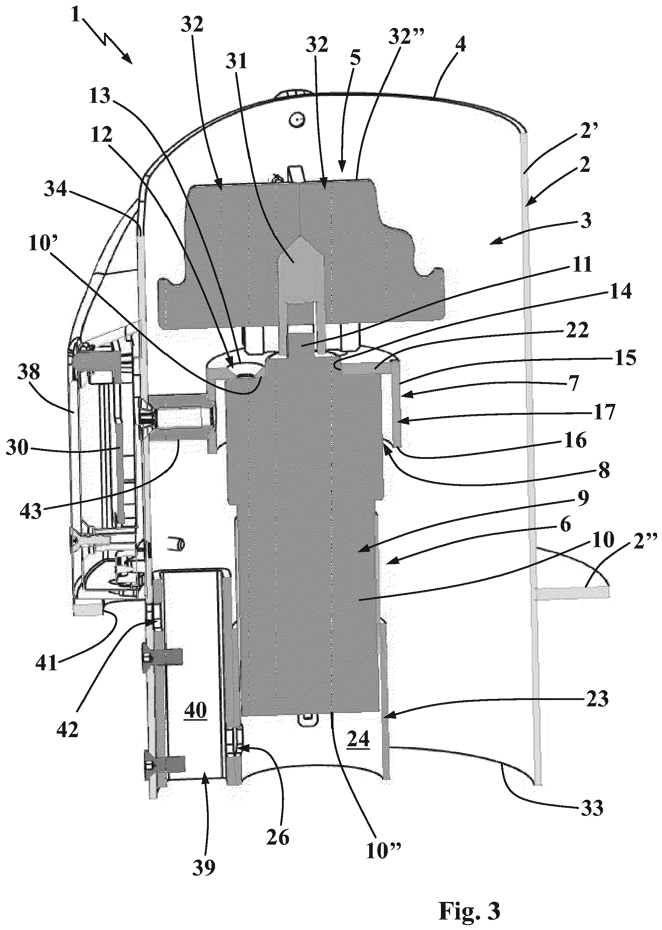

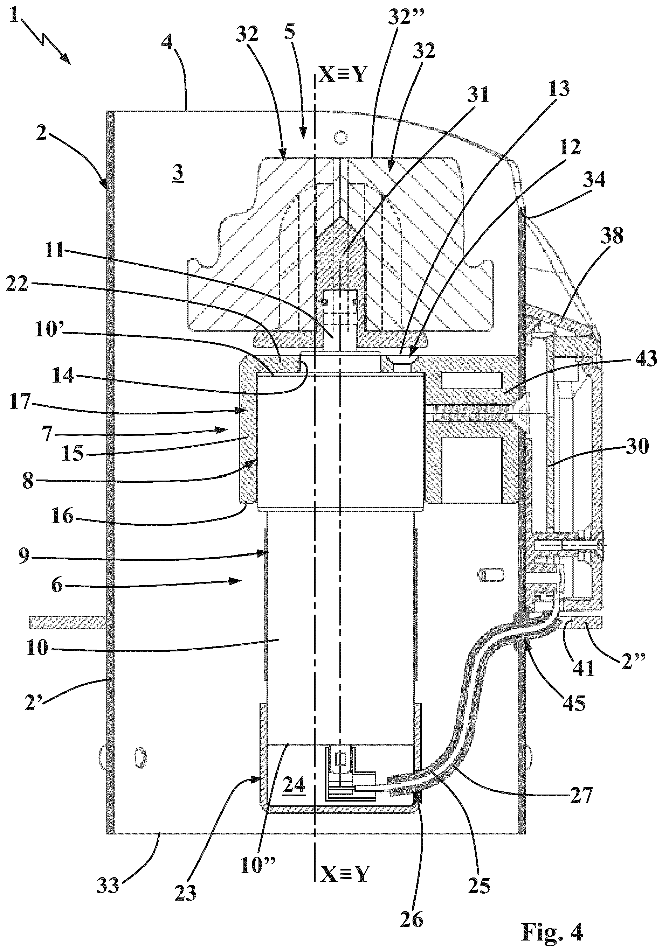

Otherwise, in accordance with a second embodiment illustrated in the enclosed figure 3 or with a third embodiment illustrated in the enclosed figure 4, the casing 10 of the electric motor 9 of the movement means 6 is inserted with clearance in the mounting seat 8 defined by the support structure 7 and, in addition, such support structure 7 comprises retention means 12 arranged for preventing the exit of the casing 10 from the mounting seat 8.

More in detail, the sizing of the casing 10 such to allow the insertion with clearance in the mounting seat 8 allows mounting, during assembly, the electric motor 9 without having to exert any pressure and, therefore, without having to subject the support structure 7 nor the containment structure 2 to stresses. At any rate, such second embodiment (which provides for the insertion with clearance) requires the arrangement of retention means 12 which maintain in position the electric motor 9 in order to prevent that this, during the normal use of the present device 1, can be separated from the support structure 7.

Preferably, as provided for in the second and in the third embodiment, the retention means 12 comprise one or more screws (not illustrated), which are placed to traverse corresponding holes 13 made on the support structure 7 and inserted in corresponding threaded seats (not illustrated) made on the casing 10 of the electric motor 9.

More in detail, such retention means 12 with screws makes the mechanical connection of the electric motor 9 on the support structure 7 simple and secure and allows easily removing the aforesaid electric motor 9 from the support structure 7 if a maintenance intervention is requested.

Advantageously, independent of whether the casing 10 of the electric motor 9 is inserted via fitting or with clearance in the mounting seat 8, the support structure 7 comprises an internally hollow sleeve 17, which is provided at least with one lateral delimitation wall 15 extended along the rotation axis X of the brush 5 and at least partially extended around the aforesaid rotation axis X in order to delimit the mounting seat 8 and at least one insertion opening 16 which is traversed by the casing 10 of the electric motor 9.

More in detail, such sleeve 17 can be mechanically connected to the containment structure 2 inside the housing chamber 3 or directly (by means of one or more screws, welding, gluing and the like) or indirectly through further components which, together with sleeve 17 itself, constitute the support structure 7 (such further components can be connected to the containment structure 2 by means of one or more screws, gluing, welding and the like).

As illustrated for example in the enclosed figure 2, the insertion opening 16 is advantageously directed towards the inlet opening 4 of the housing chamber 3 and, in addition, the second portion 10" of the casing 10 of the electric motor 9 is at least partially inserted in the mounting seat 8 and the first portion 10' projects from the insertion opening 16 such that the brush 5 is placed adjacent to the inlet opening 4.

In accordance with the first embodiment of figure 2, the insertion opening 16 is directed towards the inlet opening 4 and the casing 10 of the electric motor 9 is inserted via fitting in the mounting seat 8 to traverse the insertion opening 16, in a manner such that in order to assemble the present device 1 it is sufficient to fit the second portion 10" of the casing 10 in the mounting seat 8 delimited by the sleeve 17 and, then, fix the sleeve 17 (directly or indirectly through further parts of the support structure 7) to the containment structure 2 inside the housing chamber 3.

Nevertheless, in accordance with an embodiment variant not illustrated in the enclosed figures, the insertion opening 16 is directed towards the inlet opening 4 and the casing 10 of the electric motor 9 is inserted with clearance in the mounting seat 8 to traverse the insertion opening 16. In this manner, in order to assemble the present device 1, it is sufficient to insert the second portion 10" of the casing 10 in the mounting seat 8 delimited by the sleeve 17, employ retention means 12 (e.g. screws placed to traverse holes made on the sleeve 17 and inserted in corresponding threaded seats of the casing 10) in order to retain the casing 10 within the mounting seat 8 and, then, fix the sleeve 17 (directly or indirectly through further parts of the support structure 7) to the containment structure 2 inside the housing chamber 3.

Advantageously, as illustrated in particular in figure 2, the support structure 7 comprises a passage portion 19 fixed to the containment structure 2 and to the sleeve 17, internally hollow and defining a passage section 18 communicating, on one side, with the mounting seat 8 and, on the other side, with an environment outside the housing chamber 3. In addition, the electric motor 9 advantageously comprises a power cable (not illustrated in the aforesaid figure 2) extended starting from the second portion 10" of the casing 10, at least partially contained in the mounting seat 8 and placed to traverse the passage section 18 in order to terminate in the aforesaid environment outside the housing chamber 3.

In particular, the aforesaid power cable is connected on one side to the casing 10 and on the other side to the electronic control unit 30 (which, as previously described, is advantageously placed outside the housing chamber 3 and enclosed by the box-like body 38), such that the electronic control unit 30 can adjust the electrical power supply to the movement means 6 and, thus, adjust the operation of the electric motor 9.

Preferably, in order to isolate, in the most effective possible manner, the mounting seat 8 from the housing chamber 3, the support structure 7 comprises a first plug (not illustrated) mechanically connected al (i.e. in particular fixed to or made integrally with the) sleeve 17, placed to close the mounting seat 8 on the side opposite that of the insertion opening 16 and spaced from the second portion 10" of the casing in order to leave space for the power cable.

In particular, the passage portion 19, being fixed on one side to the containment structure 2 and on the other side al sleeve 17, maintains the sleeve 17 and the electric motor 9 inserted therein suspended within the housing chamber 3.

More in detail, the fact that the power cable is extended starting from the second portion 10" of the casing 10 that is inserted in the mounting seat 8 ensures that the sleeve 17 isolates, from the rest of the housing chamber 3, the portion of power cable that is connected, for example by means of a suitable jack or plug, to the casing 10, i.e. that power cable part that is most easily damaged in case of contact with the ground coffee residue. Additionally, the arrangement of an internally hollow passage portion 19 allows protecting the subsequent portion of power cable of the electric motor 9, since it encloses the aforesaid power cable in the passage section 18 (isolating it from the rest of the housing chamber 3) and thus prevents the aforesaid power cable from being stretched up to interfering with the movement of the brush 5 or from being dirtied by the ground coffee residue.

In particular, the passage section 18 is extended from a first passage opening 20, which is made on the sleeve 17 and communicates with the mounting seat 8, to an opposite second passage opening 21, which is made on the containment structure 2 and communicates with the environment outside the housing chamber 4.

Advantageously, the passage portion 19 is attained with an internally hollow protection tube 35, extended parallel to the rotation axis X between a first end 35' directed towards the inlet opening 4 and a second end 35" directed towards the discharge opening 33 (preferably closed by corresponding second plugs not illustrated in figure 2), provided with a first lateral opening 36 (preferably adjacent to the second end 35") placed at the first passage opening 18 and with a second lateral opening 37 (preferably adjacent to the first end 35') placed at the second passage opening 21.

Advantageously, in order to confer high aesthetic value to the present device 1, the second passage opening 21 is made between the support flange 2" and the discharge opening 33 or is made at least partially aligned with the support flange 2", which is preferably provided with at least one cut 41 placed at the aforesaid second passage opening 21 in order to allow the power cable to reach the electronic control unit 30 (which in particular is placed within the housing volume defined by the box-like body 38, which is still more preferably placed just above the support flange 2").

In this manner, during use, the power cable is hidden from view by the same support flange 2' and by the work surface on which the present device 1 is installed, given that in such case the power cable will be extended outside the housing chamber 3 (i.e. in particular into the outside environment) below the same work surface, in particular before coming to be connected to the electronic control unit 30 covered by the box-like body 38.

As illustrated in figures 3 and 4 respectively relative to the second and third embodiments, the insertion opening 16 is advantageously directed in opposite direction with respect to the inlet opening 4 of the housing chamber 3. Additionally, the support structure 7 advantageously comprises a bottom wall 22 transverse to the rotation axis X, fixed to the sleeve 17 and placed to delimit the mounting seat 8 in an opposite position with respect to the insertion opening 16. In addition, the first portion 10' of the casing 10 is inserted in the mounting seat 8, the second portion 10" projects from the insertion opening 16 and the bottom wall 22 is provided with a through opening 14 traversed by the drive shaft 11 of the electric motor 9 such that the brush 5 is placed adjacent to the inlet opening 4.

In accordance with the aforesaid second and third illustrated embodiments, the insertion opening 16 is advantageously directed in opposite direction with respect to the inlet opening 4, the first portion 10' of the casing 10 is inserted with clearance in the mounting seat 8 to traverse the insertion opening 16 and retention means 12 are also provided for maintaining the first portion 10' of the casing 10 within the mounting seat 8, and such retention means 12 comprise in particular one or more screws (not illustrated) placed to traverse corresponding holes 13 made on the bottom wall 22 of the support structure 7 and inserted in corresponding threaded seats made on the casing 10. For example, three screws and three corresponding holes 13 are provided that are equally distributed on the bottom wall 22 around the through opening 14 traversed by the drive shaft 11 of the electric motor 9.

In addition, in order to avoid the screws from being able to interfere with the rotation of the brush 5, advantageously, these are of "flat head" type and the holes 13 made on the bottom wall have a corresponding flared shape.

Nevertheless, in accordance with an embodiment variant not illustrated in the enclosed figures, the insertion opening 16 is directed in the opposite direction with respect to the inlet opening 4 and the first portion 10' of the casing 10 is inserted via fitting in the mounting seat 8, with the drive shaft 11 placed to traverse the through opening 14 made on the bottom wall 22 which, together with the sleeve 17, delimits the aforesaid mounting seat 18.

Advantageously, the support structure 7 comprises a support arm 43 mechanically connected to the containment structure 2 and to the sleeve 17 and/or bottom wall 22, in a manner such that the aforesaid support arm 43 maintains the sleeve 17 and the electric motor 9 suspended within the housing chamber 3. For example, the support arm 43 can be fixed to the containment structure 2 by means of threaded connection means (e.g. one or more screws) or welding, while it can be mechanically connected to the sleeve 17 and/or to the bottom wall 22 or by means of other connection means (as in the second embodiment of figure 3), by means of welding (in accordance with embodiment variants that are not illustrated) or since made integrally therewith (as in the third embodiment of figure 4).

In accordance with the second and third embodiments, the present device 1 comprises a protection body 23 fit on the second portion 10" of the casing 10 and defining, with the aforesaid second portion 10", a protective seat 24.

More in detail, with the term "fit" referred to the protection body 23, it must be intended hereinbelow that the protection body 23 can be maintained at the second portion 10" of the casing 10, since it is supported by further components fixed for example to the containment structure 2 or since it is mechanically connected directly (e.g. via fitting) on the aforesaid second portion 10" and, hence, supported the latter which is in turn supported by the support structure 7.

Additionally, the electric motor 9 advantageously comprises a power cable 25 (not illustrated in the enclosed figure 3) extended starting from the second portion 10" of the casing 10, at least partially contained in the protective seat 24 and placed to traverse a third passage opening 26 made on the protection body 23.

Advantageously, the protection body 23 comprises a tubular wall (preferably extended parallel to the rotation axis X) which at least partially delimits the protective seat 24 and possibly also a closure wall, which is mechanically connected to the tubular wall (e.g. made integrally therewith or fixed thereto), is extended transverse to the tubular wall (and hence preferably also transverse to the rotation axis X) and faces and is spaced from the second portion 10" of the casing 10 in order to close the protective seat 24.

In particular, the aforesaid power cable 25 is connected on one side to the casing 10 and on the other side to the electronic control unit 30 (which, as previously described, is advantageously placed outside the housing chamber 3 is enclosed by the box-like body 38), such that the electronic control unit 30 can adjust the power supply to the movement means 6 and, thus, adjust the operation of the electric motor 9.

More in detail, the fact that the power cable 25 is extended starting from the second portion 10" of the casing 10, passing through the protective seat 24 defined by protection body 23 and from the same second portion 10", ensures that the same protection body 23 at least isolates the power cable 25 portion that is connected, for example by means of a suitable jack or plug, to the casing 10, i.e. the power cable 25 part that is mostly easily damaged in case of contact with the ground coffee residue.

In accordance with the second embodiment, the present device 1 advantageously comprises a protection structure 39 fixed to the protection body 23 and to the containment structure 2, which is internally hollow and defining a crossing section 40 communicating, on one side, with the protective seat 24 through the third passage opening 26 and, on the other side, with an environment outside the housing chamber 3. In addition, the power cable 25 is partly extended within the protective seat 24 and is placed to traverse the crossing section 40 in order to terminate in the environment outside the housing chamber 3.

In particular, given that the protection structure 39 is fixed to the containment structure 2 and to the protection body 23, the latter is maintained fit on the second portion 10" of the casing 10 of the electric motor 9 since it is supported by the protection structure 39 itself, hence without requiring, in such embodiment illustrated in figure 3, that the protection body 23 be fit on the second portion 10".

More in detail, the protection body 23 and the protection structure 39 isolate the power cable 25 with respect to the housing chamber 3 in order to prevent the ground coffee residue from dirtying the power cable 25 itself and in order to prevent the aforesaid power cable 25 from being stretched up to interfering with the movement of the brush 5. In particular, the crossing section 40 is extended from the third passage opening 26 made on the protection body 23 to an opposite fourth passage opening 42, which is made on the containment structure 2 and communicates with the environment outside the housing chamber 3.

Advantageously, in order to confer high aesthetic value to the present device 1, the fourth passage opening 42 is made between the support flange 2" and the discharge opening 33 or is at least partially made aligned with the support flange 2", which is preferably provided with at least one cut 41 placed at the aforesaid fourth passage opening 42 in order to allow the power cable 25 to reach the electronic control unit 30 (which in particular is placed within the housing volume defined by the box-like body 38, which is still preferably placed just above the support flange 2").

In this manner, during use, the power cable 25 remains hidden from view by the same support flange 2' and by the work surface on which the present device 1 is installed, given that in such case the power cable 25 will be extended outside the housing chamber 3 (i.e. in particular into the outside environment) below the same work surface, in particular before being connected with the electronic control unit 30 covered by the box-like body 38.

In accordance with the third embodiment of figure 4, however, the power cable 25 is advantageously extended at least partly into the housing chamber 3, terminates in an environment outside the housing chamber 3 and is protected at least at the aforesaid housing chamber 3 by a sheath 27 extended at least starting from the third passage opening 26 of the protection body 23.

Preferably, the sheath 27 and the power cable 25 are extended up to an environment outside the housing chamber 3 by traversing a fifth passage opening 45 made on the containment structure 2 (in particular on the lateral wall 2').

Similar to the fourth passage opening 42, also the fifth passage opening 45 is advantageously made between the discharge opening 33 and the support flange 2", in a manner such that the power cable 25 can be connected to the electronic control unit 30 and that the same power cable 25 with the respective sheath 27 are hidden from the user's view.

The invention thus conceived therefore attains the pre-established objects.

## Claims

1. Device (1) for cleaning filters for coffee machines, which comprises:
- a containment structure (2) defining a housing chamber (3) provided with at least one inlet opening (4);
- a brush (5), which is placed inside said housing chamber (3), faces said inlet opening (4) and is susceptible of being rotated around a rotation axis (X) thereof;
- movement means (6), which carry said brush (5) mounted thereon and are arranged for rotating said brush (5) around said rotation axis (X);
- a support structure (7), which is mechanically connected to said containment structure (2), is placed mainly inside the housing chamber (3) of said containment structure (2), defines at least one mounting seat (8) for said movement means (6) and is arranged for supporting said movement means (6) inside said housing chamber (3);
said device (1) being **characterized in that** said movement means (6) comprising an electric motor (9) provided with:
- a casing (10), which is extended between a first portion (10') and an opposite second portion (10"), is sealed at least against dust, is partly inserted in the mounting seat (8) of said support structure (7) and is partly extended outside said mounting seat (8); and
- a drive shaft (11), which is rotatably inserted in said casing (10), projects from the first portion (10') of said casing (10), carries said brush (5) mounted thereon and is actuatable in rotation with respect to said casing (10) in order to rotate said brush (5) around said rotation axis (X).

2. Device (1) according to claim 1, **characterized in that** the casing (10) of the electric motor (9) of said movement means (6) is inserted via fitting in the mounting seat (8) defined by said support structure (7).

3. Device (1) according to claim 1, **characterized in that** the casing (10) of the electric motor (9) of said movement means (6) is inserted with clearance in the mounting seat (8) defined by said support structure (7);
said support structure (7) comprising retention means (12) arranged for preventing the exit of said casing (10) from said mounting seat (8).

4. Device (1) according to any one of the preceding claims, **characterized in that** said support structure (7) comprises an internally hollow sleeve (17), which is provided at least with a lateral delimitation wall (15) extended along the rotation axis (X) of said brush (5) and at least partially extended around said rotation axis (X) in order to delimit said mounting seat (8) and at least one insertion opening (16) which is traversed by the casing (10) of said electric motor (9).

5. Device (1) according to claim 4, **characterized in that** the insertion opening (16) is directed towards the inlet opening (4) of the housing chamber (3);
the second portion (10") of the casing (10) of said electric motor (9) is at least partially inserted in the mounting seat (8) and said first portion (10') projects from the insertion opening (16) such that the brush (5) is placed adjacent to said inlet opening (4).

6. Device (1) according to claim 5, **characterized in that** said support structure (7) comprises a passage portion (19) fixed to said containment structure (2) and to said sleeve (17), internally hollow and defining a passage section (18) communicating, on one side, with said mounting seat (8) and, on the other side, with an environment outside said housing chamber (3);
said electric motor (9) comprising a power cable extended starting from the second portion (10") of said casing (10), at least partially contained in said mounting seat (8) and placed to traverse said passage section (18) in order to terminate in said environment outside said housing chamber (3).

7. Device (1) according to claim 4, **characterized in that** said insertion opening (16) is directed in the opposite direction with respect to the inlet opening (4) of said housing chamber (3);
said support structure (7) comprising a bottom wall (22) transverse to said rotation axis (X), fixed to said sleeve (17) and placed to delimit said mounting seat (8) in opposite position with respect to said insertion opening (16);
the first portion (10') of said casing (10) being inserted in said mounting seat (8), said second portion (10") projecting from said insertion opening (16) and said bottom wall (22) being provided with a through opening (14) traversed by the drive shaft (11) of said electric motor (9) such that the brush (5) is placed adjacent to said inlet opening (4).

8. Device (1) according to claim 7, **characterized in that** it comprises a protection body (23) fit on the second portion (10") of said casing (10) and defining, with said second portion (10"), a protective seat (24);
said electric motor (9) comprising a power cable (25) extended starting from the second portion (10') of said casing (10), at least partially contained in said protective seat (24) and placed to traverse a third passage opening (26) made on said protection body (23).

9. Device (1) according to claim 8, **characterized in that** it comprises a protection structure (39) fixed to said protection body (23) and to said containment structure (2), internally hollow and defining a crossing section (40) communicating, on one hand, with said protective seat (24) through said third passage opening (26) and, on the other hand, with an environment outside said housing chamber (3);
said power cable (25) partly extended within said protective seat (24) and being placed to traverse said crossing section (40) in order to terminate in said environment outside said housing chamber (3).

10. Device (1) according to claim 8, **characterized in that** said power cable (25) is at least partly extended in said housing chamber (3), terminates in an environment outside said housing chamber (3) and is protected at least at said housing chamber (3) by a sheath (27) extended at least starting from the third passage opening (26) of said protection body (23).
